(19) Europäisches Patentamt
European Patent Office
Office européen des brevets

(11) Veröffentlichungsnummer: **0 154 826 B1**

(12) **EUROPÄISCHE PATENTSCHRIFT**

(45) Veröffentlichungstag der Patentschrift: **02.10.91**

(51) Int. Cl.[5]: **C01B 33/04**

(21) Anmeldenummer: **85101578.4**

(22) Anmeldetag: **13.02.85**

(54) **Verfahren zur Herstellung von Silan.**

(30) Priorität: **13.03.84 DE 3409172**

(43) Veröffentlichungstag der Anmeldung:
**18.09.85 Patentblatt 85/38**

(45) Bekanntmachung des Hinweises auf die Patenterteilung:
**02.10.91 Patentblatt 91/40**

(84) Benannte Vertragsstaaten:
**AT BE CH DE FR GB IT LI LU NL SE**

(56) Entgegenhaltungen:
**EP-A- 0 063 987**
**EP-A- 0 111 924**
**DE-A- 2 743 002**
**US-A- 3 163 590**
**US-A- 4 374 111**

(73) Patentinhaber: **D. Swarovski & Co.**
**Postfach 15**
**A-6112 Wattens(AT)**

(72) Erfinder: **Porcham, Wolfgang, Dr.**
**Waldweg 1**
**A-6060 Mills(AT)**

(74) Vertreter: **Kador & Partner**
**Corneliusstrasse 15**
**W-8000 München 5(DE)**

**EP 0 154 826 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung von Silan, $SiH_4$, durch Umsetzung von Siliciumtetrafluorid, $SiF_4$, mit Magnesiumhydrid, $MgH_2$.

$$SiF_4 + 2\ MgH_2 \rightarrow SiH_4 + 2\ MgF_2$$

Silan beansprucht vielfältiges technisches Interesse vor allem bei der Herstellung moderner integrierter Schaltkreise und bei der Herstellung photovoltaischer Zellen auf Basis amorphem Siliciums.

Zur Herstellung von Silan sind Verfahren bekannt, die von metallurgischem Silicium oder aber von Halogensilanen als Rohstoff ausgehen.

Unter den Halogensilanen ist $SiF_4$ aufgrund seiner Verfügbarkeit und seiner geringen Einstandskosten von besonderem technischem Interesse. Es fällt beim nassen Aufschluß von Rohphosphaten in großen Mengen im Abgas an und kann daraus nach verschiedenen zum Teil auch großtechnisch erprobten Verfahren, beschrieben z.B. in Proc.-Fert. Soc. (PFRSAZ) V 163, 23 pp, 1977, in hoher Reinheit gewonnen werden. Als gasförmige Verbindung kann $SiF_4$ falls gewünscht, leicht weiter gereinigt werden. $SiF_4$ hat mit 27 Gew.-% Siliciumanteil den höchsten Siliciumgehalt aller Siliciumperhalogenide und auch einen höheren Siliciumgehalt als Trichlorsilan. Es ist daher ein sehr wirtschaftliches Ausgangsmaterial zur Herstellung anderer Siliciumverbindungen.

Aus der DE-PS 1 034 159 ist es bekannt, Siliciumhalogenide mit komplexen Alkalihydrid-Bortrialkyl- oder Alkalihydrid-Aluminiumalkoholat-Verbindungen, gelöst in einem organischen Lösungsmittel, zu Siliciumhydriden umzusetzen. Hierbei ist nachteilig, daß das entstehende Siliciumhydrid mit Lösungsmitteldämpfen sowie Bor- bzw. Aluminiumverbindungen verunreinigt wird und das Verfahren nur diskontinuierlich ausgeführt werden kann.

Es ist ferner bekannt, $SiF_4$ mit Calciumhydrid bei Temperaturen zwischen 250 und 300°C zu Silan umzusetzen, (Paul Hagenmüller, Robert de Pape, Comp.rend.251,2032-4 (1960); Robert de Pape, Ann.Chim., t.8, 1963, S.185-195). Hierbei ist nachteilig, daß die Reaktion bald zum Stillstand kommt und Silicium abgeschieden wird. So wurde z.B. nach einer Reaktionszeit von 24 Stunden bei 290°C nur 12% Umsatz festgestellt.

Aus der US-PS 2 933 374 ist es bekannt, $SiF_4$ mit Wasserstoff im elektrischen Lichtbogen zu Fluorsilanen umzusetzen, die über Natriumfluorid bei Temperaturen zwischen 125 und 300°C zu Silan disproportioniert werden. Hierbei ist nachteilig, daß der Umsatz von $SiF_4$ zu Fluorsilanen trotz hohem Energieeinsatz nur mit geringer Ausbeute erfolgt und bei der Disproportionierung mit Natriumfluorid $SiF_4$ durch Bildung von Natriumhexafluorosilicat verloren geht.

Aus der DE-PS 1 080 077 sind ein Verfahren und eine Vorrichtung zur Hydrierung halogensubstituierter Verbindungen der Elemente Bor, Silizium oder Germanium durch Umsatz mit Alkali- oder Erdalkalihydriden in einer Schmelze eines Alkali-, Ammonium- oder Erdalkalihalogenids oder -halogenidgemisches bekannt. Dieses Verfahren setzt allerdings den Einsatz von Metallhydriden, die bei den relativ hohen Arbeitstemperaturen in Schmelze beständig sind, z.B. Lithiumhydrid, voraus. Hingegen sind weder in der Beschreibung des Verfahrens noch der Vorrichtung Angaben gemacht über den Zusammenhang zwischen der Arbeitstemperatur in der Schmelze und der thermischen Zersetzung der Metallhydride. Es wird vielmehr vorausgesetzt, daß die Metallhydride bei den relativ hohen Arbeitstemperaturen in Schmelze beständig sind.

Berücksichtigt man jedoch, daß z.B. Natrium- und Kaliumhydrid bereits bei etwa 300°C zu zersetzen beginnen und daß sich Magnesiumhydrid bereits bei etwa 280°C vollständig zersetzt (S.Ullmann, 4.Aufl., Bd.13,S.114 und 116 bzw. E.Wiberg and E.Amberger, "Hydrides of the Elements of Main Groups I-IV", Elsevier 1971, S.29 und 35), so ist der Einsatz gerade dieser technisch leicht zugänglichen Metallhydride ausgeschlossen. Magnesiumhydrid, jenes Erdalkalihydrid, das aus Magnesium, dem einzigen großtechnisch verfügbaren, kostengünstigen Erdalkalimetall hergestellt werden kann, ist nach dem Verfahren der Druckschrift wegen thermischer Zersetzung nicht verwendbar. Um die hohen Einstandskosten der verwendbaren Metallhydride zu senken, wird ferner vorgeschlagen, den Reaktor so auszulegen, daß er neben der Silansynthese auch gleichzeitig zur elektrolytischen Gewinnung von Alkali- oder Erdalkalimetallen und zur nachfolgenden Synthese des entsprechenden Metallhydrids verwendet werden kann. Reaktoren, die für alle diese Reaktionen geeignet sind, sind natürlich entsprechend aufwendig und störungsanfällig.

Aufgabe der Erfindung ist die Schaffung eines Verfahrens zur Herstellung von reinem Silan aus den großtechnisch verfügbaren Rohstoffen Siliziumtetrafluorid und Magnesiumhydrid.

Es wurde gefunden, daß die Umsetzung von $SiF_4$ zu $SiH_4$ mit $MgH_2$ in hoher Ausbeute und kurzer Reaktionszeit verwirklicht werden kann, wenn $MgH_2$ in einer Schmelze aus Alkali- oder Erdalkalihalogeniden unter einem Wasserstoffpartialdruck, der größer als der Dissoziationsdruck des $MgH_2$ bei der Arbeitstempe-

ratur in der Schmelze ist, mit $SiF_4$ umgesetzt wird.

Geeignete Schmelzen sollen einen möglichst niedrigen Schmelzpunkt haben, um den Wasserstoffdruck während der Umsetzung niedrig halten zu können, das Reaktormaterial zu schonen, den Energiebedarf in Grenzen zu halten sowie eine thermische Zersetzung des gebildeten Silans hintanzuhalten. Die Schmelzen dürfen weder mit $SiF_4$ noch mit $SiH_4$ reagieren. Sie sollen frei von Wasser, Hydroxid und Oxid sein, um eine Korrosion des Reaktors sowie unerwünschte Nebenreaktionen zu vermeiden.

Gemische verschiedener Alkali- oder Erdalkalihalogenide werden bevorzugt. Um niedrige Schmelzpunkte zu erzielen, ist es insbesondere vorteilhaft, eutekische Gemische einzusetzen. Beispiele für geeignete niedrigschmelzende eutekische Salzgemische sind:

| Zusammensetzung (Mol%) | Fp. der Eutektika (°C) |
|---|---|
| 41,0 RbCl/56,6 LiCl/2,4 NaCl | 318 |
| 40 KBr/60 LiBr | 348 |
| 24 KCl/43 LiCl/33 NaCl | 357 |
| 41,5 KCl/58,5 LiCl | 361 |
| 47 $CaCl_2$/38,5 NaCl/14,5 $BaCl_2$ | 450 |

Zur Durchführung der Hydrierung gemäß der Erfindung muß $MgH_2$, in Abhängigkeit von der Arbeitstemperatur in der Schmelze, unter Wasserstoffpartialdrucken, die die nachstehenden Werte nicht unterschreiten, in der Schmelze gelöst werden.

| Wasserstoffpartialdruck (bar) | Arbeitstemperatur in der Schmelze (°C) |
|---|---|
| 2 | 300 |
| 6 | 350 |
| 16 | 400 |
| 39 | 450 |

In diese unter dem entsprechenden Wasserstoffdruck stehende Lösung von $MgH_2$ in Schmelze, wird nun ein Gemisch von $SiF_4$ und $H_2$ geleitet. Dabei kann das Verhältnis der Partialdrucke von $SiF_4$ zu $H_2$ sein:

$$p_{SiF_4} : p_{H_2} = 1 : 0,5 \text{ bis etwa } 1 : 20$$

Hierbei muß gewährleistet sein, daß der Wasserstoffpartialdruck größer als der Dissoziationsdruck des $MgH_2$ bei der Arbeitstemperatur in der Schmelze ist, d.h. beispielsweise die in obiger Tabelle genannten Werte aufweist.

Bei einer Arbeitstemperatur von z.B. 400°C muß

$$p_{H_2} \geq 16$$

bar sein. Daraus folgt:

$$p_{SiF_4} : p_{H_2} = 32 : 16 \text{ bis } 0,8 : 16$$

$$p_{SiF_4} + p_{H_2} = P$$

Für diese Grenzmischungsverhältnisse ergibt sich daher ein Gesamtdruck P von mindestens 48 bzw. 16,8 bar des $SiF_4/H_2$-Gemisches. In diesem Fall wird nun der Wasserstoffdruck über der Lösung von $MgH_2$ in Schmelze, die bei einem Wasserstoffdruck > 16 bar hergestellt worden war, auf 48 bzw. 16,8 bar erhöht,

worauf mit dem Einleiten des $SiF_4/H_2$-Gemisches begonnen werden kann.

Die Hydridionenkonzentration in der Schmelze soll nicht unter etwa 0,3 Gew.-% absinken. Dies entspricht einer Magnesiumhydridkonzentration in der Schmelze von etwa 4 Gew.-%.

Zur Stabilisierung des Silans kann ein Wasserstoffüberschuß im Kopfraum des Reaktors, vorteilhafterweise

$$\frac{H_2}{SiH_4} \geq 3,$$

aufrechterhalten werden.

Zur Durchführung der Synthese von $SiH_4$ aus $SiF_4$ kann ein beheizbarer, hinreichend druckfester Reaktor benutzt werden, der mit einem kräftigen Rührwerk, einem Thermometer, einem Gaseinleitsrohr, das das $SiF_4/H_2$-Gemisch in die Schmelze einzuleiten gestattet, einem Gasableitrohr im Kopfraum des Reaktors, einer Öffnung zur Einbringung der Schmelze, einer Öffnung zum Austrag der Schmelze, sowie einer Vorrichtung, mit der $MgH_2$ unter dem erforderlichen Wasserstoffdruck zudosiert werden kann, ausgestattet ist.

Nach dem erfindungsgemäßen Verfahren können Ausbeuten bezogen auf eingesetztes $SiF_4$ von bis zu 90 % erzielt werden. Ein besonderer Vorteil ist es, daß das gebildete Silan im wesentlichen nur mit nicht umgesetztem $SiF_4$, sowie sehr kleinen Mengen an Fluorsilanen, sowie Wasserstoff als Trägergas verunreinigt ist, hingegen nicht mit Kohlenwasserstoffen verunreinigt ist. $SiF_4$ und Fluorsilane können leicht an Molekularsieben oder schwach basischen Anionenaustauschern abgetrennt werden. Die Trennung von $SiH_4$-$H_2$ kann leicht erfolgen aufgrund des stark unterschiedlichen Siedepunktes oder Gefrierpunktes durch Kondensation oder Ausfrieren von $SiH_4$ oder aber aufgrund des stark unterschiedlichen Adsorptionsverhaltens, z.B. durch Adsorption des $SiH_4$-Anteiles an Aktivkohle.

Ein weiterer Vorteil des Verfahrens, der vor allem bei der Herstellung von Silanqualitäten für die elektronische Industrie wichtig ist, ist die Abwesenheit von Diboran im gebildeten Silan, selbst dann wenn z.B. $SiF_4$ das mit Bortrifluorid verunreinigt ist, eingesetzt wird, weil Diboran mit den Hydridionen in der Schmelze zu nichtflüchtigem Boranat weiterreagiert.

Vorteilhaft ist schließlich, daß die Schmelze in ihrer Zusammensetzung während der Reaktion praktisch nicht verändert wird; sie reichert sich lediglich mit schwerlöslichem, kristallinem $MgF_2$ an, das leicht durch Sedimentation abgetrennt werden kann.

Das neue Verfahren kann daher auch halbkontinuierlich geführt werden, indem man in die Schmelze neben $SiF_4/H_2$-Gemisch auch kontinuierlich $MgH_2$ einträgt. Nach einiger Zeit, die durch die Größe des Schmelzvolumens bestimmt ist, wird dann das Rührwerk abgestellt, $MgF_2$ sedimentiert und abgezogen. Das erhaltene $MgF_2$ kann aufgrund seines hohen Fluorgehaltes mit Vorteil zur Herstellung von Fluorwasserstoff verwendet werden. Der erfindungsgemäße Prozess ist daher besonders wirtschaftlich, weil er sowohl den Silicium- als auch den Fluoranteil des an sich wertlosen, bisher vorwiegend als Schadstoff betrachteten $SiF_4$, in Produkte von technischem Interesse umzuwandeln gestattet.

Eine vorteilhafte Ausführungsform des erfindungsgemäßen Verfahrens besteht darin, der Schmelze neben $MgH_2$ 0,5 bis 20 Gew.%, insbesondere 5 bis 15 Gew.% Kalium-, Rubidium- oder Cäsiumflorid zuzusetzen. Es wurde gefunden, daß die Durchflußgeschwindigkeit des $SiF_4/H_2$-Gemisches durch eine derartige Schmelze erheblich gesteigert werden konnte, ohne den Silanumsatz, bezogen auf eingesetztes $SiF_4$, zu verringern. Ohne der Theorie verhaftet zu sein, könnte dies zurückgeführt werden auf eine Erhöhung der Hydridkonzentration in Lösung gemäß der Gleichung

$$2\ MeF + MgH_2 \rightarrow 2\ MeH + MgF_2$$
Me = K, Rb oder Cs

so daß die Schmelze dann nicht nur an $MgH_2$ sondern auch an MeH gesättigt ist und deshalb schneller mit $SiF_4$ reagiert oder aber auf eine temporäre Chemisorption des $SiF_4$ an gelöstem Fluorid unter temporärer Bildung von Hexafluorosilicat, was letztlich zu einer Erhöhung der Verweilzeit von $SiF_4$ in der Schmelze und deshalb zu einem Umsatz mit hoher Ausbeute führt.

Nach einer weiteren vorteilhaften Ausführungsform des Verfahrens wird das erforderliche $MgH_2$ aus Magnesium und $H_2$ direkt in dem Reaktor hergestellt. Dazu kann in den Reaktor, der bereits mit Schmelze beschickt ist, Magnesiumpulver, das in an sich bekannter Weise mit Katalysatoren wie Jod, Magnesiumjodid, Quecksilber- oder Titanchloriden vorbehandelt sein kann, eingetragen und bei einer Temperatur von 318 - 450°C und einem Wasserstoffdruck von 100 bis 200 bar zu $MgH_2$ umgesetzt werden.

Die Erfindung wird nachstehend anhand von Beispielen näher erläutert.

**Beispiel 1**

Die Reaktion wurde in einem heizbaren 1,5 l Edelstahlreaktor, geeignet für Betriebsdrucke bis 25 bar, ausgerüstet mit einem Doppelkreiselrührer, einem Thermometer, einem Gaseinleitrohr, das das $SiF_4/H_2$-Gemisch in die Schmelze einzuleiten gestattet, einer Silanableitung aus dem Kopfraum des Reaktors, einer Öffnung zum Einbringen der Schmelze, sowie einer Eintragsvorrichtung für $MgH_2$, durchgeführt.

Der Reaktor wurde mit 0,9 l eutektischer Schmelze aus KCl/LiCl/NaCl beschickt.

Ansatz:
15 g $MgH_2$ (0,57 Mol)
24 g $SiF_4$ (0,23 Mol)
$MgH_2$ wurde unter einem Wasserstoffdruck von 20 bar in der Schmelze bei 380°C gelöst. $SiF_4$ wurde mit $H_2$ gemischt, so daß das Verhältnis der Partialdrucke

$$p_{SiF_4} : p_{H_2} = 1 : 4$$

und der Gesamtdruck P = 20 bar betrug.

Diese $SiF_4/H_2$-Mischung wurde durch die Schmelze geleitet. Aus dem austretenden Gasstrom wurde Silan durch Ausfrieren abgetrennt. Nach 69 Minuten wurde die $SiF_4$-Zufuhr abgedreht.
Ausbeute:
6,9 g Silan (0,21 Mol). Das entspricht 93 %
der Theorie bezogen auf eingesetztes $SiF_4$

**Beispiel 2**

Es wurde im selben Reaktor gearbeitet wie bei Beispiel 1. Der Reaktor wurde jedoch mit 0,9 l eutektischer Schmelze aus KCl/LiCl/NaCl, die 10 % Kaliumfluorid, KF, enthielt, beschickt.
Ansatz:
22 g $MgH_2$ (0,84 Mol)
24 g $SiF_4$ (0,23 Mol)
Die Arbeitsbedingungen waren die gleichen wie bei Beispiel 1. Nach 34 Minuten wurde die $SiF_4$-Zufuhr abgedreht.
Ausbeute:
6,7 g Silan (0,21 Mol). Das entspricht 90 %
der Theorie bezogen auf eingesetztes $SiF_4$.

**Patentansprüche**

1. Verfahren zur Herstellung von Silan, dadurch gekennzeichnet, daß Siliziumtetrafluorid mit Magnesiumhydrid in einer Schmelze aus Alkali- oder Erdalkalihalogeniden unter einem Wasserstoffpartialdruck, der größer als der Dissoziationsdruck des Magnesiumhydrids bei der Temperatur der Schmelze ist, umgesetzt wird.

2. Verfahren nach Anspruch 1, dadurch gekennzeichnet, daß das Magnesiumhydrid in situ in der Schmelze aus Magnesium und Wasserstoff gebildet wird.

3. Verfahren nach Anspruch 1 oder 2, dadurch gekennzeichnet, daß eine Schmelze verwendet wird, die aus zwei oder mehreren Salzen besteht, die ein Eutektikum bilden.

4. Verfahren nach Anspruch 1 bis 3, dadurch gekennzeichnet, daß die Schmelze 0,5 bis 20 Gew.% Kalium-, Rubidium- und/oder Cäsiumfluorid enthält.

5. Verfahren nach Anspruch 1 bis 4, dadurch gekennzeichnet, daß die Hydridionenkonzentration in der Schmelze nicht unter 0,3 Gew.-% beträgt.

6. Verfahren nach Anspruch 1 bis 5, dadurch gekennzeichnet, daß im Kopfraum des Reaktors ein Wasserstoffüberschuß aufrechterhalten wird.

## Claims

1. A process for producing silane, characterized in that silicon tetrafluoride is reacted with magnesium hydride in a melt of alkali halides or alkaline earth halides under a hydrogen partial pressure which is greater than the dissociation pressure of the magnesium hydride at the temperature of the melt.

2. The process of claim 1, characterized in that the magnesium hydride is formed of magnesium and hydrogen in place in the melt.

3. The process of claim 1 or 2, characterized in that a melt is used consisting of two or more salts which form a eutectic.

4. The process of claims 1 to 3, characterized in that the melt contains 0.5 to 20 wt.% of potassium fluoride, rubidium fluoride and/or cesium fluoride.

5. The process of claims 1 to 4, characterized in that the concentration of hydride ions in the melt is not less than 0.3 wt.%.

6. The process of claims 1 to 5, characterized in that a surplus of hydrogen is maintained in the headspace of the reactor.

## Revendications

1. Procédé de fabrication du silane, caractérisé par le fait que l'on fait réagir du tétrafluorure de silicium avec de l'hydrure de magnésium dans une masse fondue d'halogénures alcalins ou alcalino-terreux, sous une pression partielle d'hydrogène qui est supérieure à la pression de dissociation de l'hydrure de magnésium à la température de la masse fondue.

2. Procédé selon la revendication 1, caractérisé par le fait que l'on forme l'hydrure de magnésium in situ dans la masse fondue à partir de magnésium et d'hydrogène.

3. Procédé selon l'une des revendications 1 ou 2, caractérisé par le fait que l'on utilise une masse fondue qui se compose de deux sels, ou davantage, lesquels forment un eutectique.

4. Procédé selon l'une des revendications 1 à 3, caractérisé par le fait que la masse fondue contient 0,5 à 20% en poids de fluorure de potassium, rubidium et/ou césium.

5. Procédé selon l'une des revendications 1 à 4, caractérisé par le fait que la concentration en ions hydrure dans la masse fondue ne s'élève pas à une valeur inférieure à 0,3% en poids.

6. Procédé selon l'une des revendications 1 à 5, caractérisé par le fait que, dans l'espace de tête du réacteur, on maintient un excès d'hydrogène.